# EUROPEAN PATENT APPLICATION

(11) **EP 4 331 748 A1**
(43) Date of publication of application: **06.03.2024**
(21) Application number: 22193421.9
(22) Date of filing: 01.09.2022
(51) Int. Cl.: B23B 5/12, B23B 27/10, B23B 27/14

(54) **INSERT FOR BAR-PEELING**

(71) Applicant: Dormer Pramet s.r.o, 787 01 Sumperk (CZ)
(72) Inventor: MAIXNER, Vladimir, 787 53 Sumperk (CZ); PISKA, Miroslav, 602 00 Brno (CZ)
(74) Representative: Sandvik

(57) **Abstract**

A cutting insert 10 for bar-peeling comprising: an upper end surface 20; a lower end surface 30; a peripheral side surface extending between the upper end surface 20 and the lower end surface 30, the peripheral side surface comprising two opposing major side surfaces 40a, 40b and two opposing minor side surfaces 50a, 50b; a cutting edge 60 formed at an intersection between one of the major side surfaces 40a and the upper end surface 20; the cutting edge 60 comprising: a first cutting edge 61 having one of its end points at one of the minor side surfaces 50a; a second cutting edge 63 forming an approximately right angle with said minor side surface 50a and an obtuse angle with the first cutting edge 61, and; an intermediate cutting edge 62 between the first cutting edge 61 and the second cutting edge 63; a forming wiper 80 formed between said major side surface 40a and the upper end surface 20, the forming wiper 80 being positioned a longer distance from said minor side surface 50a than the distance from the second cutting edge 63 to said minor side surface 50a, wherein a coolant groove 70 is formed in said major side surface 40a between the second cutting edge 63 and the forming wiper 80.

## Description

### TECHNICAL FIELD

The present invention relates to a metal cutting insert intended for use in bar-peeling operations.

### BACKGROUND

Inserts for use in bar-peeling operations are well known in the art.

Bar-peeling is a metal working operation which occurs relatively early in the metal forming process. Blanks of, for example, various steels, nickel-based, titanium and aluminium alloys, formed from, for example, a forging or hot-rolling process usually have surface imperfections like micro-cracks, mill scale or metal oxide layers. It is essential to remove these imperfections before the blank can be subject to further processing.

In bar-peeling a workpiece in the form of a bar or tube is axially fed through a rotating shaving head that comprises several rotary cutter heads. The rotary cutter heads being provided with cutting inserts that remove the surface imperfections from the workpiece. Such a process is disclosed in EP0703842.

EP1861217 discloses a cutting insert for bar-peeling of a similar type as in the present application. This known insert works well in most applications. However, for some applications, the machined workpiece may have a too rough surface finish after bar-peeling.

Therefore, there is a need for improvements in cutting inserts for bar-peeling to alleviate some of the above-mentioned problems with providing an excellent surface finish on the workpiece after bar-peeling.

It is therefore an object of the present invention to present an improved cutting insert for bar-peeling that alleviates some of the above-mentioned problems.

### SUMMARY

According to the present invention, the above-mentioned object is achieved by means of a cutting insert for bar-peeling having the features defined in claim 1.

The cutting insert for bar-peeling according to the present invention comprises: an upper end surface, a lower end surface and a peripheral side surface extending between the upper end surface and the lower end surface. The peripheral side surface comprises two opposing major side surfaces and two opposing minor side surfaces. A cutting edge is formed at an intersection between one of the major side surfaces and the upper end surface. Said cutting edge comprises: a first cutting edge having one of its end points at one of the minor side surfaces, a second cutting edge forming an approximately right angle with said minor side surface and an obtuse angle with the first cutting edge and an intermediate cutting edge between the first cutting edge and the second cutting edge. A forming wiper is formed between said major side surface and the upper end surface. The forming wiper is positioned a longer distance from said minor side surface than the distance from the second cutting edge to said minor side surface. A coolant groove is formed in said major side surface between the second cutting edge and the forming wiper.

The first cutting edge is the cutting edge that first comes into contact with the workpiece and thus acts as a roughing edge to remove the biggest asperities on the workpiece.

The intermediate cutting edge preferably has a curved shape in a top view from the upper end surface and is the cutting edge that gives the workpiece its main form and can thus be seen as the main cutting edge.

The second cutting edge functions as a smoothing or finishing edge to further remove asperities and irregularities from the workpiece.

The first cutting edge is preferably adjacent to the intermediate cutting edge and the intermediate cutting edge is preferably adjacent to the second cutting edge.

The bar-peeling insert is designed to be used when peeling metallic objects such as, for example, bars or tubes made of various steels, nickel-based, titanium and aluminium alloys.

The present inventors have realized that the configuration according to the present invention further improves the surface finish of the workpiece. The forming wiper positioned behind the second cutting edge will plastically deform the remaining surface asperities to give the workpiece its desired quality with a smooth and glossy surface finish. The deformation of the surface asperities by the forming wiper will also deformation harden the surface which in many applications is desired. The coolant groove positioned between the second cutting edge and the forming wiper, i.e. in front of the forming wiper, will direct coolant used in the process to the workpiece to cool and lubricate the workpiece before being machined by the forming wiper. This cooling and lubrication of the workpiece makes the flattening of asperities by the forming wiper a more efficient and smooth operation.

Many different types of coolant can be used, for example a water-based coolant or an oil-based coolant.

The word "behind" in this application has the meaning that it is an edge or surface that comes into contact with the workpiece after the other mentioned edge or surface. "In front of" has the opposite meaning, i.e. it is an edge or surface that comes into contact with the workpiece before the other mentioned edge or surface.

The wording "top view" means a view perpendicular towards the top surface. The wording "side view" means a view perpendicular towards one of the major side surfaces.

The upper end surface, the lower end surface and the major side surfaces are not necessarily flat or plane surfaces. Instead they may comprise several surfaces at different levels, possibly having a non-zero angle between them. The upper end surface, the lower end surface and the major side surface includes all the features visible when viewing respective surface straight on perpendicularly to the major parts of respective surface.

Since the second cutting edge forms an obtuse angle with the first cutting edge at least one of the major side surfaces has at least two surfaces with an equally obtuse angle between them.

The cutting insert is elongated and the major side surfaces are longer than the minor side surfaces.

Preferably the cutting insert has identical features, as disclosed in the claims, at the diagonally opposite side of the upper end surface. The cutting insert is in this configuration twice indexable.

Even more preferably the lower end surface of the cutting insert is identical to the upper end surface. The cutting insert is in this configuration four times indexable.

According to one embodiment, the coolant groove extends from the upper end surface all the way to the lower end surface.

Preferably the coolant groove extends in a straight line, perpendicular to a central plane (CP), between the upper end surface and the lower end surface.

This configuration further increases the amount of coolant that reaches the workpiece since a longer coolant groove more efficiently directs the coolant to the workpiece.

According to one embodiment, the coolant groove has a cross-section that is semi-circular in a top view.

Preferably, the end points of the semi-circle are rounded towards the flat surfaces of the major side surface.

Preferably the coolant groove is designed without having any indents or protrusions that obstructs the flow of coolant.

This configuration further improves the flow of coolant to the workpiece since a semi-circular cross section reduces the risk of turbulent flow of the coolant.

According to an embodiment, the forming wiper comprises an upper forming wiper and a lower forming wiper, wherein the upper forming wiper forms an angle with the lower forming wiper.

This configuration with an upper forming wiper and a lower forming wiper makes it possible to apply a smoother engagement of the workpiece at the area of the insert where the forming wiper is located and thus a better surface finish of the workpiece can be obtained.

According to an embodiment, an internal angle β that the lower forming wiper forms with the positional plane is smaller than an internal angle α that the upper forming wiper forms with the positional plane.

This configuration ensures that the engagement of the workpiece at the area of the insert where the forming wiper is located is made even smoother and that coolant from the coolant groove easier reaches the workpiece. Having the upper forming wiper at a larger internal angle α than the internal angle β of the lower forming wiper ensures that the contact pressure between forming wiper and workpiece is initially quite low when the workpiece engages the area of the upper forming wiper and then increases substantially when the workpiece engages the area of the lower forming wiper. It is important to first have a low contact pressure to remove the largest asperities and to then increase the contact pressure to achieve a workpiece with a glossy surface and high surface finish. Having both the upper forming wiper and lower forming wiper angled ensures that the contact pressure will gradually increase.

The lower forming wiper is preferably formed as a bevel having a constant angle β with the positional plane.

The upper forming wiper is preferably formed as a bevel having a constant angle α with the positional plane. In an alternative embodiment the upper forming wiper is formed as an arc. The internal angle α is in this case measured between the positional plane and the tangent to the arc midway between the endpoints of the arc.

Preferably the upper forming wiper forms an internal angle α with the positional plane that is between 125° to 145°, more preferably between 130° to 140°, and most preferably between 133° to 137°. This angle ensures that the contact pressure when the workpiece engages the forming wiper is relatively low and that a sufficient amount of coolant is present between workpiece and forming wiper to efficiently remove asperities on the surface of the workpiece.

Preferably the lower forming wiper forms an internal angle β with the positional plane that is between 92° to 98°, more preferably between 93° to 97°, and most preferably between 94° to 96°. This angle ensures a high contact pressure between workpiece and forming wiper which ensures that the workpiece will obtain a high surface finish.

Preferably the forming wiper has a length that is preferably between 13 % to 23 % of the length of the insert, more preferably between 15 % to 21 %, and most preferably between 17 % to 19 %.

Preferably the upper forming wiper has a width that is preferably between 1 % to 5 % of the thickness of the insert, more preferably between 2 % and 4 %, and most preferably between 2,5 % to 3,5 %.

Preferably the lower forming wiper has a width that is preferably between 11 % to 21 % of the thickness of the insert, more preferably between 13 % to 19 %, and most preferably between 15 % to 17 %.

This configuration with having a specific angle, specific length and specific width of the forming wiper all contribute to improving the surface finish of the workpiece after the forming wiper has been in contact with the workpiece.

According to one embodiment, the first cutting edge is straight in a top view.

This configuration ensures efficient removal of the biggest irregularities from the workpiece.

Preferably the intermediate cutting edge is curved and has a radius of 7 to 13 mm, more preferably 8 to 12 mm and most preferably 9 to 11 mm, as seen in a top view.

This configuration ensures efficient cutting of the main form of the workpiece with no or limited vibrations and cutting chips of the desired form and size are formed.

According to one embodiment, the first cutting edge, the second cutting edge and the intermediate cutting edge lie in a common plane as seen in a side view and wherein the distance from this common plane to a central plane (CP) of the insert is shorter than the distance from a positional plane of the upper end surface to the central plane (CP).

This configuration decreases the risk of damage to the cutting edges when clamping the insert to a rotary cutter head.

According to one embodiment, the upper end surface comprises a first chip breaker associated with the first cutting edge, an intermediate chip breaker associated with the intermediate cutting edge and a second chip breaker associated with the second cutting edge.

This configuration ensures that sufficient breakage of the chips is obtained at all stages of the machining process to be able to efficiently transport cutting chips away from the insert and workpiece. Respective chip breaker can have a specific geometry optimized for the specific cutting that is performed by the associated cutting edge.

The wording "associated with" means that respective chip breaker is closest to that specific cutting edge.

The respective chip breakers are positioned inwards of respective cutting edge. "Inwards" being a direction from the respective cutting edge approximately towards a line dividing the upper end surface in two halves along the length direction of the insert.

According to one embodiment, the upper end surface comprises a lowered rake surface inwards of the cutting edge and a maximum width of the intermediate chip breaker at the top of the intermediate chip breaker is larger than a maximum width of the first chip breaker at the top of the first chip breaker and a maximum width of the second chip breaker at the top of the second chip breaker at positions above the rake surface.

This configuration ensures that the intermediate chip breaker can withstand the biggest forces which is necessary since the intermediate chip breaker must be able to withstand the forces arising when curved chips are produced in a wide range of depths of cut. The intermediate chip breaker is thus strengthened and the lifetime of the insert is increased with this configuration.

"Lowered" here means that the rake surface is closer to the central plane (CP) than the positional plane of the upper end surface is.

The "top" of respective chip breaker is the part of the chip breaker that has the largest distance to the central plane (CP).

The wording "above the rake surface" means the part of respective chip breaker that is positioned within the width of the rake surface but at a larger distance from the central plane (CP) than the distance from the rake surface to the central plane (CP).

According to one embodiment, the distance from the top surface of the intermediate chip breaker to a central plane (CP) of the insert is smaller than the distance from the top surface of the first chip breaker to the central plane (CP) and the distance from the second chip breaker to the central plane (CP).

This configuration further strengthens the intermediate chip breaker.

According to an embodiment, the top surface of the intermediate chip breaker is flat and parallel to the central plane (CP).

This configuration further strengthens the intermediate chip breaker and is also beneficial for applying a more efficient hard coating, for example TiN or Al₂O₃, to the intermediate chip breaker.

According to an embodiment, the top surfaces of the first chip breaker and the second chip breaker are level with the positional plane of the upper end surface.

This configuration decreases the cost of manufacturing the insert since the tools used for pressing the insert would have a simpler production.

According to an embodiment, a shield chip breaker is located inwards of the first cutting edge and positioned between said minor side surface and the first chip breaker.

This configuration strengthens or protects the first cutting edge and improves the resistance to high forces especially when the workpiece approaches into cutting action.

According to an embodiment, the lower end surface is identical to the upper end surface.

This configuration ensures that more cutting edges are present on the insert and the insert can be indexable up to four times. This decreases the cost of the cutting operation.

The invention also relates to a rotary cutter head comprising a tool body and at least one bar-peeling insert according to any of the above mentioned embodiments, wherein each of the at least one bar-peeling inserts is detachably mounted in an insert seat of the tool body.

### LIST OF DRAWINGS

Embodiments of the invention will now be described in detail with regard to the annexed drawings, in which:
Fig. 1 is a perspective view of a cutting insert for bar-peeling according to an embodiment of the present invention.
Fig. 2a is a side view towards a major side surface of the cutting insert of Fig. 1.
Fig. 2b is a side view towards a minor side surface of the cutting insert of Fig. 1.
Fig. 2c is a top view towards the upper end surface of the cutting insert of Fig. 1.
Fig. 3a is a cross-sectional view of a portion cutting insert taken at section Illa-IIIa of Fig. 2c.
Fig. 3b is a cross-sectional view of a portion of the cutting insert taken at section IIIb-IIIb of Fig. 2c.
Fig. 3c is a cross-sectional view of a portion of the cutting insert taken at section IIIc-IIIc of Fig. 2c.
Fig. 3d is a cross-sectional view of a portion of the cutting insert taken at section IIId-IIId in Fig. 2c.

### DETAILED DESCRIPTION OF EMBODIMENTS

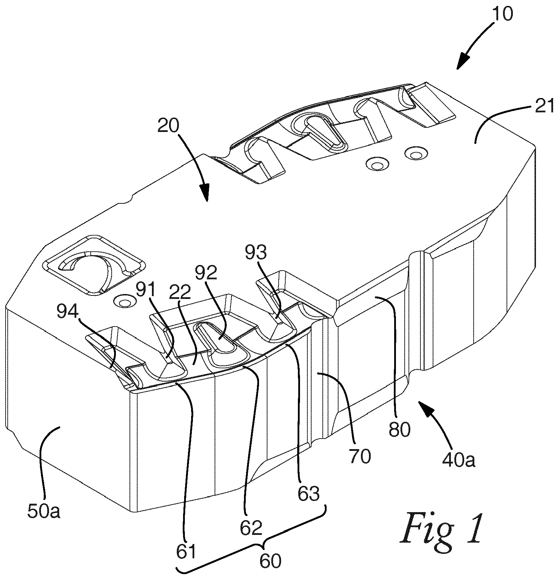

A cutting insert for bar-peeling 10 according to an embodiment of the present invention is shown in Figs. 1 to 3.

The insert 10 comprises an upper end surface 20 and an opposing lower end surface 30, the upper end surface 20 being identical to the lower end surface 30 except for numbering and markings on the insert 10. For purposes of the description below only features of the upper end surface 20 will be described. The insert 10 further comprises a peripheral side surface extending between the opposing end surfaces 20, 30. The insert is elongated and the length of the insert 10 is approximately twice the width of the insert 10.

The upper end surface comprises a positional plane 21, a rake surface 22 and several chip breakers 91-94. The positional plane is flat and parallel with a central plane (CP) that extends midway between, and parallel to, the upper end surface 20 and the lower end surface 30 and divides the insert in two identical halves.

The peripheral side surface comprises two opposite minor side surfaces 50a, 50b and two opposite major side surfaces 40a, 40b. Each minor side surface 50a, 50b is made of a single plane surface while each major side surface 40a, 40b includes all the surfaces visible when viewing the insert perpendicularly towards the longer sides of the peripheral side surface. Each major side surface 40a, 40b comprises several plane surfaces, and several curved surfaces, of which some of them have a non-zero angle between them.

At the intersection of the upper end surface 20 and one of the major side surfaces 40a a cutting edge 60 is formed. The cutting edge 60 comprises several distinct cutting edges. The cutting edge 60 is lowered, or closer to the central plane (CP), compared to the positional plane 21. Starting at the intersection between one of the minor side surfaces 50a and the major side surface 40a a first cutting edge 61 is formed at the intersection between the upper end surface 20 and the major side surface 40a. Behind, meaning that it is further from the minor side surface 50a where the first cutting edge 61 starts, and adjacent to the first cutting edge 61 is an intermediate cutting edge 62. The intermediate cutting edge 62 is curved and has a radius of approximately 10 mm. Behind and adjacent to the intermediate cutting edge 62 is a second cutting edge 63. In other words, the second cutting edge 63 is closer to the other minor side surface 50b compared to the distance between the intermediate cutting edge 62 and the other minor side surface 50b. The first 61 and the second cutting edge 63 are both straight in a top view and the first cutting edge 61 forms an obtuse angle with the second cutting edge 63. The obtuse angle is in this embodiment approximately 155°. Behind and adjacent to the second cutting edge 63 is a coolant groove 70 and behind and adjacent to the coolant groove 70 is a forming wiper 80. Behind and adjacent to the forming wiper 80 is an additional coolant groove. This coolant groove is primarily in operation when the insert 10 is turned upside down and the lower end surface 30 is in operation but also gives a contribution to the cooling of the workpiece when the upper end surface 20 is in operation.

The first cutting edge 61, the intermediate cutting edge 62 and the second cutting edge 63 occupy a common plane when viewed in a side view. This common plane is parallel to and lowered, i.e. it is closer to the central plane (CP), compared to the positional plane 21.

Inwards of the cutting edge 60 is a rake surface 22. The rake surface 22 is lowered compared to the positional plane 21. Also, the rake surface 22 is lowered compared to the common plane occupied by the first cutting edge 61, the intermediate cutting edge 62 and the second cutting edge 63.

Starting at the rake surface 22 and extending in a general inwards direction are chip breakers. Inwards of the first cutting edge 61 is a first chip breaker 91. Inwards of the intermediate cutting edge 62 is an intermediate chip breaker 92 and inwards of the second cutting edge 63 is a second chip breaker 93. Additionally, a shield chip breaker 94 is positioned inwards of the first cutting edge 61 at a position adjacent to the minor side surface 50a.

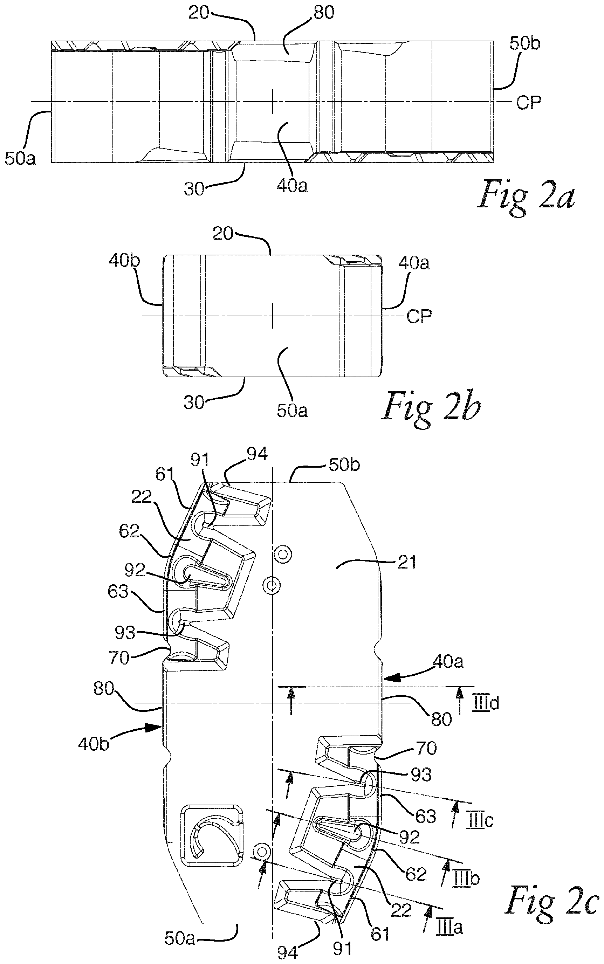

The top surface of the intermediate chip breaker 92 has a width that is larger than the width of the top surface of both the first chip breaker 91 and the top surface of the second chip breaker 93 at the positions that are above the rake surface 22. As illustrated in Fig. 2c, the top surfaces of the first and second chip breakers 91, 93 have a generally triangular shape and are connected to the positional plane 21, whereas the top surface of the intermediate chip breaker 92 has a generally oval shape and is separate from, i.e. not directly connected to, the positional plane 21. The first and second chip breakers 91, 93 have a shape widening away from associated first and second cutting edges 61, 63. The intermediate chip breaker 92 has a shape narrowing away from its associated intermediate cutting edge 62.

The coolant groove 70 extends along a straight line, perpendicular to the central plane (CP), all the way between the upper end surface 20 and the lower end surface 30 and has a cross-section that is semi-circular in a top view. The outer ends of the semi-circle are rounded to give as smooth flow of the coolant medium as possible. The radius of the semi-circle is approximately 0,8 mm. The surface of the coolant groove 70 is smooth without any indents or protrusions to give a smooth and unobstructed flow of the coolant.

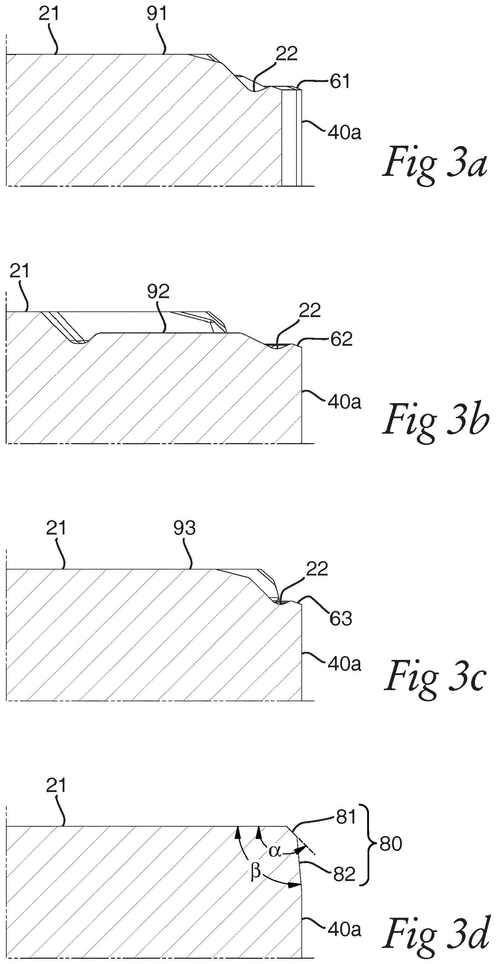

The forming wiper 80 comprises an upper forming wiper 81 and a lower forming wiper 82. The upper forming wiper 81 is formed as a bevel between the upper end surface 20 and the major side surface 40a. The lower forming wiper 82 is formed as a bevel in the major side surface 40a and is adjacent to and below the upper forming wiper 81. The forming wiper 80 has a length that is approximately 18 % of the length of the insert 10 and the forming wiper 80 is positioned on both halves, as seen in a lengthwise direction, of the insert 10. As seen in the cross-sectional view in Fig. 3d the upper forming wiper 81 forms an angle α with the positional plane 21. The angle α is in this embodiment approximately 135°. The lower forming wiper 82 forms an angle β with the positional plane. The angle β is in this embodiment approximately 95°. The width of the upper forming wiper 81 is approximately 3 % of the thickness of the insert 10 and the width of the lower forming wiper 82 is approximately 16 % of the thickness of the insert 10.

Reference is now made to figures 3a-c showing cross-sections of the chip breakers. The first chip breaker 91 and the second chip breaker 93 are very similar in structure. They both rise inwards from the rake surface 22 with a sloped surface up to the first chip breaker's 91 and second chip breaker's 93 top surfaces which are level with, and connected to, the positional plane 21. The intermediate chip breaker 92 rises inwards from the rake surface 22 with a sloped surface up to the top surface of the intermediate chip breaker 92. The top surface of the intermediate chip breaker 92 is flat and parallel to the positional plane 21. At the intermediate chip breaker's most inwards position the intermediate chip breaker 92 slopes downwards towards the rake surface 22. The top surface of the intermediate chip breaker 92 is lowered, or closer to the central plane (CP), compared to the top surface of the first chip breaker 91 and the top surface of the second chip breaker 93.

The invention further relates to a rotary cutter head comprising a tool body and at least one bar-peeling insert 10. Each of the bar-peeling inserts 10 is detachably mounted in an insert seat of the tool body.

The insert 10 is preferably made of a hard metal such as cemented carbide. The entire, or parts of, insert 10 may be coated by a hard coating such as, for example, TiN or Al₂O₃. The rotary cutter head is preferably made of a steel material.

While this invention has been illustrated and described in accordance with a preferred embodiment, it is recognized that variations and changes may be made therein without departing from the invention as set forth in the claims.

## Claims

1. A cutting insert (10) for bar-peeling, comprising:
- an upper end surface (20);
- a lower end surface (30);
- a peripheral side surface extending between the upper end surface (20) and the lower end surface (30), the peripheral side surface comprising two opposing major side surfaces (40a, 40b) and two opposing minor side surfaces (50a, 50b);
- a cutting edge (60) formed at an intersection between one of the major side surfaces (40a) and the upper end surface (20);
- the cutting edge (60) comprising:
- a first cutting edge (61) having one of its end points at one of the minor side surfaces (50a);
- a second cutting edge (63) forming an approximately right angle with said minor side surface (50a) and an obtuse angle with the first cutting edge (61), and;
- an intermediate cutting edge (62) between the first cutting edge (61) and the second cutting edge (63);
- a forming wiper (80) formed between said major side surface (40a) and the upper end surface (20), the forming wiper (80) being positioned a longer distance from said minor side surface (50a) than the distance from the second cutting edge (63) to said minor side surface (50a); **characterized in that** a coolant groove (70) is formed in said major side surface (40a) between the second cutting edge (63) and the forming wiper (80).

2. The cutting insert for bar-peeling according to claim 1, wherein the coolant groove (70) extends from the upper end surface (20) all the way to the lower end surface (30).

3. The cutting insert for bar-peeling according to claim 1 or 2, wherein the coolant groove (70) has a cross-section that is semi-circular in a top view.

4. The cutting insert for bar-peeling according to any of the preceding claims, wherein the forming wiper (80) comprises an upper forming wiper (81) and a lower forming wiper (82), wherein the upper forming wiper (81) forms an angle with the lower forming wiper (82).

5. The cutting insert for bar-peeling according to claim 4, wherein an internal angle (β) that the lower forming wiper forms with the positional plane (21) is smaller than an internal angle (a) that the upper forming wiper forms with the positional plane (21).

6. The cutting insert for bar-peeling according to any of the preceding claims, wherein the first cutting edge (61) is straight in a top view.

7. The cutting insert for bar-peeling according to any of the preceding claims, wherein the first cutting edge (61), the second cutting edge (63) and the intermediate cutting edge (62) lie in a common plane as seen in a side view and wherein the distance from this common plane to a central plane (CP) of the insert is shorter than the distance from a positional plane (21) of the upper end surface to the central plane (CP).

8. The cutting insert for bar-peeling according to any of the preceding claims, wherein the upper end surface comprises a first chip breaker (91) associated with the first cutting edge (61), an intermediate chip breaker (92) associated with the intermediate cutting edge (62) and a second chip breaker (93) associated with the second cutting edge (63).

9. The cutting insert for bar-peeling according to claim 8, wherein the upper end surface (20) comprises a lowered rake surface (22) inwards of the cutting edge (60) and a maximum width of the intermediate chip breaker (92) at the top of the intermediate chip breaker (92) is larger than a maximum width of the first chip breaker (91) at the top of the first chip breaker (91) and a maximum width of the second chip breaker (93) at the top of the second chip breaker (93) at positions above the rake surface (22).

10. The cutting insert for bar-peeling according to claims 8 or 9, wherein the distance from the top surface of the intermediate chip breaker (92) to a central plane (CP) of the insert is smaller than the distance from the top surface of the first chip breaker (91) to the central plane (CP) and the distance from the top surface of the second chip breaker (93) to the central plane (CP).

11. The cutting insert for bar-peeling according to any of claims 8 to 10, wherein the top surface of the intermediate chip breaker (92) is flat and parallel to the central plane (CP).

12. The cutting insert for bar-peeling according to any of claims 8 to 11, wherein the top surfaces of the first chip breaker (91) and the second chip breaker (93) are level with the positional plane (21) of the upper end surface (20).

13. The cutting insert for bar-peeling according to any of claims 8 to 12, wherein a shield chip breaker (94) is located inwards of the first cutting edge (61) and positioned between said minor side surface (50a) and the first chip breaker (91).

14. The cutting insert for bar-peeling according to any of the preceding claims, wherein the lower end surface (30) is identical to the upper end surface (20).

15. A rotary cutter head comprising a tool body and at least one bar-peeling insert (10) according to any of the preceding claims, wherein each of the at least one bar-peeling inserts (10) is detachably mounted in an insert seat of the tool body.
